# EUROPÄISCHE PATENTSCHRIFT

(11) **EP 0 479 807 B1**
(45) Veröffentlichungstag und Bekanntmachung des Hinweises auf die Patenterteilung: **29.03.1995**
(21) Anmeldenummer: 90908492.3
(22) Anmeldetag: 30.05.1990
(51) Int. Cl.: G02B 6/44

(54) **OPTISCHES NACHRICHTENKABEL**
OPTICAL COMMUNICATIONS CABLE
CABLE OPTIQUE DE TELECOMMUNICATION

(30) Priorität: 06.07.1989 DE 3922475
(43) Veröffentlichungstag der Anmeldung: 15.04.1992
(73) Patentinhaber: SIEMENS AKTIENGESELLSCHAFT, 80333 München (DE)
(72) Erfinder: SCHNEIDER, Reiner, D-8624 Ebersdorf (DE)
(86) Internationale Anmeldenummer: DE9000419
(87) Internationale Veröffentlichungsnummer: WO9101014

(56) Entgegenhaltungen:
- EP-A- 0 020 036
- EP-A- 0 169 647
- EP-A- 0 216 548
- FR-A- 2 275 785
- FR-A- 2 562 272

## Beschreibung

Die Erfindung bezieht sich auf ein optisches Nachrichtenkabel mit einem zugfesten Kern und einem den Kern umschließenden extrudierten Kunststoffkärper (Kammerkörper), bei dem eine Anzahl von geschlossenen Kammern zur Aufnahme eines oder mehrerer Lichtwellenleiter vorgesehen ist, wobei die äußere Begrenzung des Kammerkörpers als Sollbruchstellen dienenden Stellen aufweist.

Aus der DE-PS 25 23 738 ist ein Nachrichtenkabel bekannt, bei dem ein zentraler Kern von einem Kunststoffkörper umschlossen ist, der eine Anzahl von Kanälen (Kammern) zur Aufnahme von Lichtwellenleiter aufweist. In der die Kammern auf ihrer nach außen weisenden Seite begrenzenden Wandung sind Abreißstränge zum Öffnen der Kammern vorgesehen.

Durch die EP-A1 0 169 647 ist ein optisches Kabel bekannt, bei dem die die Kammern verschließenden Abdeckungen mit einem Reißfaden versehen sind. Dieser Reißfaden kann die Form eines Bereiches mit verringerter Wandstärke haben und so abgezogen werden. Dabei wird in allen Fällen nur ein schmaler Teilbereich der gesamten Kammerabdeckung freigelegt, so daß für das Herausnehmen von Lichtwellenleitern nur ein schmaler Schlitz zur Verfügung steht. Ein derartiger schmaler Schlitz ermöglicht nicht die notwendige leichte Zugänglichkeit und vor allem Faßbarkeit der im Kammerinneren untergebrachten Lichtwellenleiter.

Die EP-A1 0 169 647 zeigt als Sollbruchstellen dienende Vertiefungen, welche auf die tragenden Wandteile des Kernes gerichtet sind, also nicht auf die Kammeröffnung hin zeigen.

Dies hat zur Folge, daß beim Abziehen eines zwischen zwei Sollbruchstellen liegenden Teiles des Außenmantels unnötig viel Material entfernt wird. Bei dieser Anordnung weisen zwei aufeinanderfolgende Kammern nur eine gemeinsame Sollbruchstelle auf. Diese Anordnung setzt auch voraus, daß eine materialmäßig vom Kammerkörper abgesetzte Außenschicht (z.B. Mantel) vorgesehen ist.

Die Erfindung zielt darauf ab, die Möglichkeiten zum einfachen und sicheren Öffnen und damit zum Herstellen eines freien Zugangs zu den in den Kammern befindlichen Lichtwellen erheblich zu verbessern. Zur Lösung dieser Aufgabe wird gemäß der Erfindung bei einem optischen Nachrichtenkabel der eingangs genannten Art die Ausgestaltung so getroffen, daß die Nuten jeweils an den beiden Seiten der Kammern vorgesehen sind, daß die Sollbruchstellen an den beiden Seiten der Kammern als wulstartige Ausbuchtungen ausgebildet wird, die Teile der äußeren Kammerwandung bilden und so eine jeweils die gesamte Kammerbreite abdeckende Schale ergeben, und daß die Schale an ihren beiden Seiten jeweils über schmale Stege mit dem Kunststoffkörper verbunden ist.

Die so verschlossenen Kammern ermöglichen ein besonders leichtes Öffnen, da die Sollbruchstellen in Form von Stegen jeweils beiderseits der Kammern liegen und somit die ganze Kammerbreite leicht zugänglich gemacht werden kann. Dabei wird nicht mehr als unbedingt notwendig an Material im Außenbereich des Kabels abgenommen. Die Erfindung ist zudem sowohl bei einteilig gespritzten Anordnungen als auch bei solchen Strukturen einsetzbar, die mehrlagig , z.B. mit einer Außenschale oder Außenmantel ausgebildet sind. Durch die Anbringung der Stege und wulstartigen Ausbuchtungen am Außenumfang sind die zur Öffnung geeigneten Stellen für den Monteur deutlich sichtbar.

Da bei der Erfindung die Ausbuchtungen an ihren beiden Seiten lediglich über schmale Stege mit dem kompakten Kammerkörper verbunden sind, wird man in die Lage versetzt, eine derartige Abdeckung besonders leicht wie die Schale einer Banane abzuziehen, wenn man in das Innere der Kammern gelangen will, Diese Abzugsmöglichkeit kann noch dadurch verbessert werden, daß einem andersfarbigem Material als dem Material des zentralen Kammerkörpers herstellt.

Um zu verhindern, daß bei der Extrusion des Kammerkörpers die gleichzeitig eingelegten Lichtwellenleiter mit der heißen Kammerwand verkleben, wird man die Umhüllung der in die Kammern eingebetteten Lichtwellenleiter mit einem Trennmittel beschichten. Als Trennmittel wird man vorzugsweise eine Füllmasse verwenden, die das Längsausbreiten von Wasser in den Kammern verhindern soll.

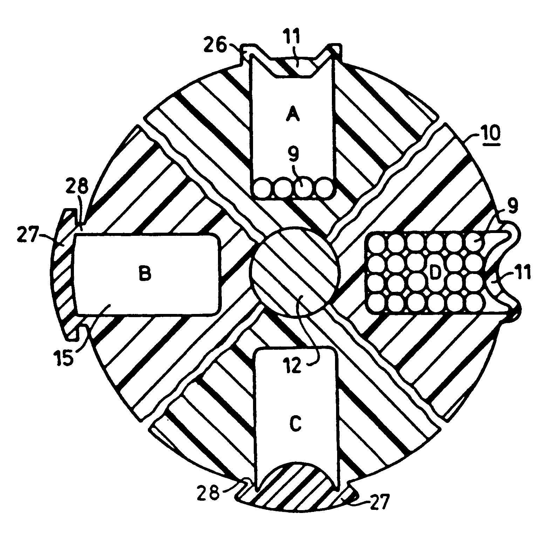

Die Erfindung wird anhand des nachstehend beschriebenen und in der Zeichnung dargestellten Ausführungsbeispieles im einzelnen erläutert. In der Zeichnung ist ein Querschnitt durch einen Kammerkörper mit verschieden ausgebildeten Sollbruchstellen dargestellt.

Die Figur zeigt einen Kammerkörper 10 mit geschlossenen Kammern 15, in die bereits während der Herstellung des Kammerkörpers die Lichtwellenleiter 9 in Form von Einzelfasern, Bündeln oder Bändchen einlaufen. Der Kammerkörper wird um einen zentralen Kern 12 extrudiert. Im Bereich der äußeren Abgrenzung 11 des Kammerkörpers 10 sind als Sollbruchstellen an den Seiten der Kammern vorgesehen, so daß im Bedarfsfalle leicht ein Zugang zu den in den Kammern liegenden Lichtwellenleitern 9 hergestellt werden kann. Im Bereich der äußeren Abgrenzung 11 der Kammerkörper 10 sind wulstartige Ausbuchtungen 26 vorgesehen. In der Figur sind vier verschiedene Typen A - D einer Kammer 15 mit einer in Form einer Schale 27 ausgebildeten Abdeckung versehen, die über dünne Stege 28 mit der äußeren Begrenzung 11 verbunden sind. Die Schale 27 ist dabei aus einem härteren oder auch anderem Material als das Material des Kammerkörpers selbst hergestellt, also z.B. aus HDPE, während der Kammerkörper selbst aus NDPE gefertigt wird. Bei einer derartigen Ausführung kann man die Zwischenlage im Bedarfsfalle nach Einschneiden der dünnen Stege leicht vom Kammerkörper abreißen und so die Lichtwellenleiter bloßlegen.

Die Kammertypen B + C zeigen Verschlüsse mit außenliegenden Schalen 27, während bei den Kammertypen A + D einwärts gerichtete Begrenzungen 11 vorgesehen sind, wobei im Falle der Kammertype D die Begrenzung auch dazu dient, die hier in Form von einer Reihe zu Bändchen zusammengefaßten Lichtwellenleitern zu fixieren.

Bei den wulstartigen Ausbuchtungen bzw. einer außen liegenden Schale ist es selbstverständlich auch möglich, im Bedarfsfalle abschnittsweise diese Ausbuchtungen bzw. Schalen abzutrennen, so daß abschnittsweise entlang des Kabelkörpers Zugang zu den innen liegenden Lichtwellenleitern geschaffen wird.

## Patentansprüche

1. Optisches Nachrichtenkabel mit einem zugfesten Kern und einem den Kern umschließenden extrudierten Kunststoffkörper, nach stehend Kammerkörper genannt, bei dem eine Anzahl von geschlossenen Kammern zur Aufnahme eines oder mehrerer Lichtwellenleiter vorgesehen ist, wobei die äußere Begrenzung des Kammerkörpers (10) als Sollbruchstellen dienende Stellen aufweist,
**dadurch gekennzeichnet,**
daß die Sollbruchstellen an den beiden Seiten der Kammern als wulstartige Ausbuchtungen (26, 28) ausgebildet sind, die Teile der äußeren Kammerwandung bilden und so eine jeweils die gesamte Kammerbreite abdeckende Schale (27) ergeben, und daß die Schale (27) an ihren beiden Seiten jeweils über schmale stege mit dem Kunststoffkörper verbunden ist.

2. Optisches Nachrichtenkabel nach Anspruch 1,
**dadurch gekennzeichnet,**
daß die die Breite der Kammer (10) abdeckende Schale (27) aus einem härteren Material als das Material des zentralen Kammerkörpers (10) besteht.

3. Optisches Nachrichtenkabel nach einem der vorhergehenden Ansprüche,
**dadurch gekennzeichnet,**
daß die Umhüllung der in die Kammern (10) eingelegten Lichtwellenleiter (9) mit einem Trennmittel beschichtet ist.

4. Optisches Nachrichtenkabel nach Anspruch 3,
**dadurch gekennzeichnet,**
daß als Trennmittel eine Füllmasse dient, die das Längsausbreiten von Wasser im Kabel verhindert.

## Claims

1. Optical communication cable having a tension-proof core and an extruded plastic body, named chambered body below, surrounding the core, in which a number of closed chambers are provided for accommodating one or more optical fibres, the outer boundary of the chambered body (10) having locations serving as rupture joints, characterized in that the rupture joints are constructed on both sides of the chambers as bead-like bulges (26, 28) which form parts of the outer chamber wall and thus produce a shell (27) respectively covering the entire chamber width, and in that the shell (27) is connected on both its sides to the plastic body via narrow webs in each case.

2. Optical communication cable according to Claim 1, characterized in that the shell (27) covering the width of the chamber (10) comprises a harder material than the material of the central chambered body (10).

3. Optical communication cable according to one of the preceding claims, characterized in that the jacket of the optical fibres (9) inserted into the chambers (10) is coated with a separator.

4. Optical communication cable according to Claim 3, characterized in that the separator is a filling compound which prevents the longitudinal propagation of water in the cable.

## Revendications

1. Câble optique de transmission d'informations comportant un coeur résistant à la traction et un corps en matière plastique extrudé, enveloppant le coeur, et désigné ci-après sous le terme de corps à chambres, dans lequel il est prévu un certain nombre de chambres fermées servant à loger un ou plusieurs guides d'ondes lumineuses, la limite extérieure du corps à chambres (10) formant des zones de rupture imposée, caractérisé par le fait que les zones de rupture imposée sont formées des deux côtés des chambres sous la forme de passages en forme de rebords (26,28), qui font partie de la paroi extérieure des chambres et forment ainsi une coque (27) qui enveloppe respectivement la chambre sur toute sa largeur, et que la coque (27) est reliée, sur ses deux côtés, au corps en matière plastique, respectivement par l'intermédiaire de petites barrettes.

2. Câble optique de transmission d'informations suivant la revendication 1, caractérisé par le fait que la coque (27), qui enveloppe la chambre (10) sur sa largeur, est réalisée en un matériau plus dur que le matériau du corps central à chambres (10).

3. Câble optique de transmission d'informations suivant l'une des revendications précédentes, caractérisé par le fait que la gaine des guides d'ondes lumineuses (9) insérée dans les chambres (10) est recouverte par un agent de séparation.

4. Câble optique de transmission d'informations suivant la revendication 3, caractérisé par le fait qu'on utilise comme agent de séparation une masse de remplissage, qui empêche la propagation longitudinale d'eau dans le câble.
